# EUROPEAN PATENT APPLICATION

(11) **EP 3 150 844 A2**
(43) Date of publication of application: **05.04.2017**
(21) Application number: 16191834.7
(22) Date of filing: 30.09.2016
(51) Int. Cl.: F02N 11/08, B60K 25/00, B60K 17/28, B60W 10/06, B60W 10/30, F16H 63/50

(54) **METHOD AND SYSTEM OF CONTROLLING AN INDUSTRIAL OR AGRICULTURAL VEHICLE**

(30) Priority: 01.10.2015 ES 201531405
(71) Applicant: Vimasol e Hijos, S.L., 03203 Elche (ES); Servicios Logisticos de Combustible de Aviacion, S.L., 28046 Madrid (ES)
(72) Inventor: MARTÍNEZ MACIÁ, Vicente, 03203 ELCHE (ES); FERNÁNDEZ BOSCH, Jesús, 28046 MADRID (ES)
(74) Representative: ZBM Patents - Zea, Barlocci & Markvardsen

(57) **Abstract**

Control method for controlling an industrial or agricultural vehicle provided with an engine, a PTO, mechanical, electrical, hydraulic, pneumatic, safety or auxiliary elements, and sensors configured to measure one or more parameters related to one or more of said elements, and to generate one or more signals representative of said parameters. The control method comprises: receiving one or more input signals from the sensors; generate one or more control signals based on the input signals to control the state of activation or deactivation of the engine in order to reduce fuel consumption; and sending the control signals to the engine to cause activation or deactivation of the engine in accordance with said control signals. Control systems and computer programs are also provided that are suitable to perform any of these control methods.

## Description

The present disclosure relates to a method and a system of controlling an industrial or agricultural vehicle which is provided with an engine, a power take-off (PTO), mechanical, electrical, hydraulic, pneumatic, safety or auxiliary elements driven or powered by or through the PTO.

### BACKGROUND

Industrial or agricultural vehicles are known that are provided with a power take-off (PTO) to drive equipment or elements incorporated to, for example, the chassis of the vehicle. The PTO usually includes an output shaft of the engine of the vehicle and a corresponding input shaft into the equipment to be driven. The vehicle may be, for example, a tractor or a truck, and equipment may be, for example, a pump (of a hydraulic device) or an alternator (for charging a battery).

The driving methods of such equipment are normally performed with the vehicle stopped (braked), the engine running and the PTO engaged (with the engine), which results in a significant fuel consumption, and consequent loss of energy efficiency, as well as emission of polluting fumes.

So-called Start/Stop devices are also known for saving fuel and reduce polluting emissions. A Start/Stop device shuts off the engine when the vehicle is stopped, although it first checks that no gears are engaged, that wheels are not rotating and that power reserve of the battery is sufficient to restart the engine. Subsequently, the Start/Stop device automatically starts the engine when the driver depresses the clutch to engage a gear. These Start/Stop devices use software to control the state (on/off) of the engine and the circuits associated thereto.

More sophisticated Start/Stop devices are known whose operation includes measuring and analysing a series of data collected by sensors in different parts of the vehicle, so that operations are conducted with adequate safety. However, these methods do not include changes in the operation of equipment driven by the PTO, which still require the PTO to be connected (or engaged) and the engine to be running during the operation of such equipment (e.g. waste collection or fuel supply).

And, vice versa, the control systems of this type of operations (waste collection, fuel supply, etc.) do not affect the operation of the engine and/or the PTO. For example, ES2102955 describes a cistern-vehicle for fuel supply with a control system that records any use or manipulation that occurs on the vehicle, in order to build a data file whose analysis allows increasing the profitability of transport and improve its safety. That is, this document refers to the recording of data on consumption, temperatures, speeds, driving hours, stopping places, amounts of liquid loaded or unloaded, etc., but it does not deal with the control of the engine or the PTO.

### SUMMARY

An object of the present disclosure is to provide a control method and system overcoming or mitigating the aforementioned disadvantages.

In the course of researching, the inventor has realized that it is not essential that the engine of the industrial or agricultural vehicle is necessarily running (or activated) throughout the duration of the special operations of the vehicle, i.e. those that belong to the own operative to which the vehicle is dedicated (e.g. fuel supply, waste collection, etc.).

In one aspect, an industrial or agricultural vehicle provided with an engine, a PTO, mechanical, electrical, hydraulic, pneumatic, safety or auxiliary elements, and sensors configured to measure one or more parameters relating to one or more of said elements (PTO and engine included), and to generate one or more signals representative of said parameters, may be controlled by a method comprising:
receiving one or more input signals from the sensors,
generating one or more control signals based on the input signals to control the state of activation or deactivation of the engine in order to reduce fuel consumption, and
sending the control signals to the engine to cause activation or deactivation of the engine in accordance with said control signals.

Thus, it is possible to reduce fuel consumption and polluting emissions without compromising the operation of the equipment driven by the PTO (when engaged with the engine). The processing of the signals (receiving input signals, generating and sending output signals) may be performed in a control module, for example computer/electronic means. The control module takes into account the operational requirements of such equipment.

In one example, the control signals may be configured to cause activation or deactivation of the engine by closing a potential free contact.

The input signals may represent the state of activation or deactivation of at least one of the following elements:
engine of the vehicle;
PTO;
ignition key;
parking brake.

Although the input signals may also represent the state of charge of at least one of the following elements:
pneumatic boiler;
electric battery.

And in general, the input signals may represent any (but relevant) parameter relating to at least one of the following elements:
engine of the vehicle;
PTO;
ignition key;
parking brake;
pneumatic boiler;
electric battery.

In some examples, generating one or more control signals based on the input signals may comprise:
verifying, depending on one or more input signals, if the vehicle is braked, the engine is disabled (or off) and the PTO is engaged;
in case of positive result of said verification:
   verifying, depending on one or more input signals, if the charge level of a battery is below a limit value of charge;
in case of positive result of said verification (insufficient battery charge): generating one or more control signals to activate the engine.

The vehicle may comprise more than one battery in order to have greater electric range. These additional batteries may have the function of keeping the important systems of the vehicle (e.g. fuel supply equipment) powered and stabilized, while the vehicle is running. In the event that the vehicle has multiple batteries, the engine may be activated if it is determined, from one or more input signals, that all these batteries or a certain number or proportion of these batteries have an insufficient level of charge (below the limit value of charge).

Activation of the engine may cause the PTO (engaged with the engine) to activate, for example, an alternator responsible for charging the battery or batteries with a level of charge that is considered insufficient. The on/off of the engine depending on the level of charge of one or more batteries may be especially advantageous in, for example, fire trucks, since they usually comprise various electrical auxiliary systems, although this may not be necessarily the case.

When the battery (or batteries) reaches an acceptable/sufficient value of charge (above the limit value) and it is determined that no other auxiliary systems require the engine to be running, one or more control signals may be generated to deactivate the engine.

In some implementations, generating one or more control signals based on the input signals may comprise:
in case of positive result of verifying if the vehicle is braked, the engine is disabled (or off) and the PTO is engaged:
   verifying, depending on one or more input signals, if the level of pneumatic pressure of a pneumatic boiler is below a limit value of pressure;
in case of positive result of said verification (insufficient pressure in the boiler): generating one or more control signals to activate the engine.

The activation of the engine may cause the PTO (engaged with the engine) to activate, for example, a compressor responsible for providing compressed air to the pneumatic boiler, so that an increase of the pressure is caused therein. If the pneumatic pressure in the boiler reaches a certain value of acceptance and it is determined that no other auxiliary system requires the engine to be running, one or more control signals may be generated to deactivate the engine.

In some examples, generating one or more control signals based on the input signals may further comprise:
in case of positive result of verifying if the vehicle is braked, the engine is off and the PTO is engaged:
   verifying, depending on one or more input signals, if hydraulic force is required;
in case of positive result of said verification: generating one or more control signals to activate the engine.

This activation of the engine may cause the PTO (engaged with the engine) to drive a hydraulic pump responsible for providing necessary (hydraulic) energy for the operation of one or more auxiliary hydraulic systems. This activation of the engine may be due only to the need for hydraulic force, but it may have the positive side effect of charging, for example, one or more batteries and/or one or more pneumatic boilers (comprised in the vehicle) although they have a level of charge that is considered acceptable.

In examples of the method, generating one or more control signals based on the input signals may comprise:
verifying, depending on one or more input signals, if the vehicle is braked, the engine is activated (or on) and the PTO is engaged;
in case of positive result of said verification:
   verifying, depending on one or more input signals, if the charge level of a battery and the pneumatic pressure of a pneumatic boiler are above a limit value of charge and of pressure respectively;
in case of positive result of said verification (sufficient charge and pressure): verifying, depending on one or more input signals, if hydraulic force is not required and, in case of positive result of said verification: generating one or more control signals to disable (or off) the engine.

With this selective deactivation of the engine, significant savings may be achieved in fuel consumption, emissions of polluting gases, generation of disturbing noise (noise pollution), etc. and greater safety due to the reduction of hot spots and sparks.

In implementations of the method, the verification of whether hydraulic force is not required may further comprise: verifying, depending on one or more input signals, if a (maximum) time limit of activation of the engine has been exceeded.

This last feature may allow obtaining a proper balance between the aforementioned savings and the number of unnecessary off and on. The off and on of the engine has some costs (in e.g. electricity, useful life, etc.), so that an excessive number of on and off may cause the pursued savings to be non-optimal. The turn off of the engine depending on the exhaustion of a (maximum) time limit of activation may increase the efficiency of the proposed method, due to the optimization of the number of on/off of the engine.

In some examples, any of the above control methods may be comprised in a Start/Stop control method as previously described. That is, a known Start/Stop control method may be extended by including any of the control methods that have been described.

According to another aspect, a first control system is provided for an industrial or agricultural vehicle comprising a memory and a processor, wherein the memory stores computer program instructions that are executable by the processor, these instructions comprising functionalities to execute any one of the control methods described above. The memory may be, for example, an EPROM memory.

According to yet another aspect, a computer program product is provided comprising program instructions for causing a (computing) system to execute any one of the above methods. Said computing system may be, for example, the above control system.

The computer program product may be embodied (or stored) on a storage means (for example, a CD-ROM, a DVD, a USB drive, a computer memory or a read-only memory) or may be carried by a carrier signal (for example, an electrical or optical carrier signal).

The computer program product may be in the form of source code, object code, an intermediate code between source code and object code such as in a partially compiled form, or in any other form suitable for use in the execution of the processes. The carrier may be any entity or device capable of carrying the computer program.

For example, the carrier may comprise storage means such as a ROM, for example a CD ROM or a semiconductor ROM, or a magnetic recording means, for example a hard disk. In addition, the carrier may be a transmissible carrier such as an electrical or optical signal, which may be conveyed via electrical or optical cable or by radio or by other means.

When the software is embodied in a signal that may be conveyed directly by a cable or other device or means, the carrier may be constituted by such a cable or other device or means.

Alternatively, the carrier may be an integrated circuit in which the computer program is embedded, the integrated circuit being adapted for performing, or for use in the performance of, the relevant methods.

According to a further aspect, a second control system for an industrial or agricultural vehicle is provided having an engine, a PTO, mechanical, electrical, hydraulic, pneumatic, safety or auxiliary elements, and sensors configured to measure one or more parameters relating to one or more of said elements (engine and PTO included) and to generate one or more signals representative of said parameters, said second control system comprising:
computer/electronic means for receiving one or more input signals from the sensors,
computer/electronic means for generating one or more control signals based on the input signals to control the state of activation or deactivation of the engine in order to reduce fuel consumption, and
computer/electronic means for sending the control signals to the engine to cause activation or deactivation of the engine in accordance with said control signals.

According to another aspect, a third control system for an industrial or agricultural vehicle is provided having an engine, a PTO, mechanical, electrical, hydraulic, pneumatic, safety or auxiliary elements, and sensors configured to measure one or more parameters relating to one or more of said elements (Engine and PTO included) and to generate one or more signals representative of said parameters, said third control system being configured to:
receive one or more input signals from the sensors,
generate one or more control signals based on the input signals to control the state of activation or deactivation of the engine in order to reduce fuel consumption, and
send the control signals to the engine to cause activation or deactivation of the engine in accordance with said control signals.

In yet a further aspect, an industrial (or agricultural) vehicle is provided that may comprise any one of the previous control systems (i.e., first, second or third control system). In some examples, the industrial (or agricultural) vehicle may comprise a bypass circuit of the (first, second or third) control system.

Other objects, advantages and features of examples of the invention will become apparent to the skilled person in view of the description, or may be learned with the practice of the invention.

### BRIEF DESCRIPTION OF THE DRAWINGS

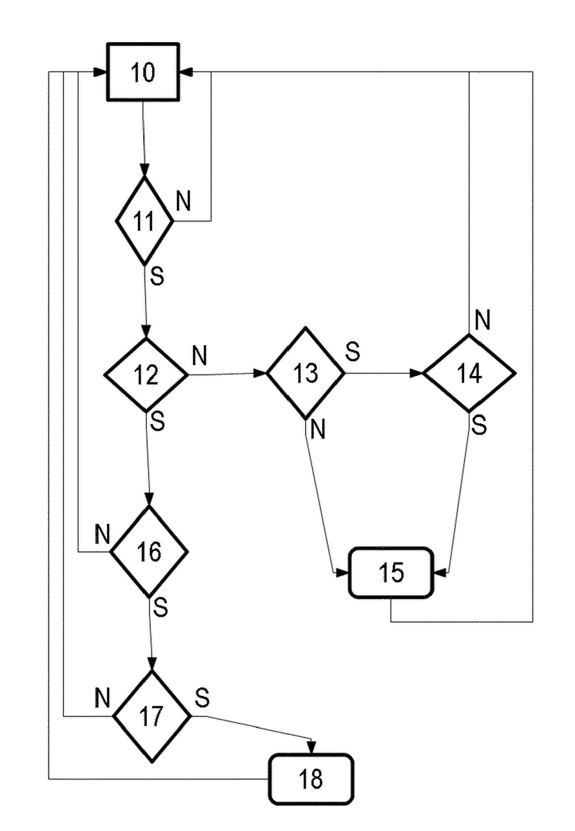

Non-limiting examples of the present disclosure will be described in the following, with reference to the attached single figure, which represents a flowchart of a control method.

### DETAILED DESCRIPTION OF EXAMPLES

Industrial or agricultural vehicles considered in the present disclosure may be provided with an engine, a PTO, some mechanical, electrical, hydraulic, pneumatic, safety or auxiliary equipment or elements driven by the PTO, and sensors configured to measure one or more parameters relating to one or more of said elements (engine and PTO included) and to generate one or more signals representative of said parameters. The vehicles considered may be, for example, vehicles dedicated to the supply of fuel at airports, in particular 'dispenser' or 'refueler' units, or vehicles for waste collection, or fire vehicles, or vehicles with a crane, etc. using electrical, pneumatic and/or hydraulic systems for driving said equipment or elements. These electric, pneumatic and/or hydraulic systems may be, in turn, powered by the PTO.

The systems and (control) methods disclosed herein are aimed at reducing the fuel consumption of these vehicles. The control system incorporates a control device and software (which implements a control method) for managing the needs of energy of the electric batteries, pneumatic boilers, hydraulic containers, etc., and also the engine of the vehicle, during the operations of the equipment driven or powered by or through the PTO.

The control system may comprise a control module for managing the response of the engine, as main source of power supply of the vehicle, to the power requirements needed by the equipment of the vehicle, from the moment in which, while the vehicle is stopped (or braked), any manoeuvre relating to the operation to which the vehicle is dedicated (for example, as mentioned before, fuel supply to, for example, aircraft, waste collection, etc.) is initiated.

The control module may comprise a mainboard having an integrated circuit powered by storage batteries, and an EPROM memory that may incorporate software or a computing application implementing the aforementioned control method. The module may have connectors for receiving input signals from the electrical, pneumatic, hydraulic, safety elements of the vehicle or from the auxiliary equipment assigned to the operation thereof. There may also be connectors for transmitting output signals for controlling the engine (and the PTO if it is engaged), and even a 'by-pass' or bypass circuit of the control module.

The module may control simultaneously or not, one, some or all the input signals described below.

Engine off signal:
- This signal may be provided by the vehicle ignition contact or by a signal provided by the body-builder with such a purpose.
- Depending on the manufacturer of the vehicle, the absence of signal or the presence thereof may be regarded as the engine is off.
- The tensions of this signal may be the following to be considered as activation:
   - Vehicles with a 12 V DC electrical system: between 11 V DC and 15 V DC.
   - Vehicles with a 24 V DC electrical system: between 20 V DC and 30 V DC.

Signal of parking brake activated:
- This signal may be provided by the pneumatic system of the vehicle brake or by a signal provided by the body-builder with such a purpose.
- It may be considered that the parking brake is activated in pneumatic monitoring systems if the pressure in the pneumatic circuit of the brake(s) is lower than 5 bars.
- The tensions of this signal may be the following to be considered as activation:
   - Vehicles with a 12 V DC electrical system: between 11 V DC and 15 V DC.
   - Vehicles with a 24 V DC electrical system: between 20 V DC and 30 V DC.

Ignition key signal:
- This signal may be provided by the ignition key of the vehicle and may be the signal corresponding to the position prior to the ignition/start of the engine.
- The tensions of this signal may be the following to be considered as activation:
   - Vehicles with a 12 V DC electrical system: between 11 V DC and 15 V DC.
   - Vehicles with a 24 V DC electrical system: between 20 V DC and 30 V DC.

Engine running signal:
- This signal may be provided by the alternator of the vehicle or through the electrical system of the body-builder of the vehicle.
- The tensions of this signal may be the following to be considered as activation:
   - Vehicles with a 12 V DC electrical system: between 11 V DC and 15 V DC.
   - Vehicles with a 24 V DC electrical system: between 20 V DC and 30 V DC.

Signal of PTO activated:
- This signal may come from the monitoring of the pneumatic or hydraulic pressure of the vehicle or through the electrical system of the body-builder of the vehicle.
- The PTO may be considered as activated if the pneumatic pressure in the PTO system is not less than 5 bars.
- The PTO may be considered as activated if the hydraulic pressure in the PTO system is not less than 20 bars.
- The tensions of this signal may be the following to be considered as activation:
   - Vehicles with a 12 V DC electrical system: between 11 V DC and 15 V DC.
   - Vehicles with a 24 V DC electrical system: between 20 V DC and 30 V DC.

Pneumatic signal from the boilers:
- This signal may be provided by the boilers and may be monitored by the control system.
- The working pneumatic pressure may be higher than 6 bars.

Electrical signal from the batteries:
- This signal may be provided by the batteries of the vehicle through a connection thereto.
- The tensions of this signal may be the following:
   - Vehicles with a 12 V DC electrical system: greater than 11.5 V DC.
   - Vehicles with a 24 V DC electrical system: greater than 23.5 V DC.

In relation to the output signals transmitted by the control module (i.e., the control signals):
Activation and start of the engine:
   - The start or on of the engine may be activated by closing a potential free contact.
   - Depending on the vehicle, this may be performed by switching the ignition key contact or through an electrical interface provided by the body-builder.

Activation of the PTO:
- The PTO may be activated by closing a potential free contact.
- Depending on the vehicle, this may be performed by auxiliary equipment (e.g. the supply equipment in the 'dispensers', or refueling units) or through an electrical interface provided by the body-builder.

If the values of these parameters are within the limits that guarantee proper operation of the corresponding elements, the engine may remain off, so that fuel consumption is prevented. If, on the contrary, the control module detects a value below a limit value (which indicates that the detected value is insufficient), in the case of electrical, pneumatic and/or hydraulic signal, the module itself may start the engine automatically. Said start of the engine may be performed after verifying the necessary safety elements for avoiding that this action involves any risk. Once the charge levels of the electrical, pneumatic and/or hydraulic system have reached the appropriate values (above a limit value, for example), the engine may be turned off.

In order to avoid that a series of on and off of the engine continuously occurs, which could shorten the useful life of the engine, a (maximum) time limit of uninterrupted operation (or activation) of the engine may be established taking into account the average duration of, for example, a supply operation of an aircraft or an emptying operation of a waste container.

Control systems of example may comprise a port for data transmission between the control module and the control panel of the vehicle. This port may be, for example, a CAN open port. Thus, interesting data could be provided, such as e.g. consumption and information of the supply tensions and intensities of the batteries, pressure of the pneumatic boiler, breakdowns, etc. These data may be used for real-time or post processing in order to, for example, detect problematic situations and determine possible solution(s).

The single figure expresses a flowchart in which the numeral references represent the following states and issues:
10 = Start
11 = Parking brake activated, PTO engaged?
12 = Engine is running?
13 = Battery charge levels and pneumatic pressure levels are adequate?
14 = Hydraulic force required?
15 = Start the engine
16 = Battery charge levels and pneumatic pressure levels are adequate?
17 = (maximum) time limit of the engine running has been exceeded and hydraulic force is not required?
18 = off the engine

Signals may also be captured from different elements of the vehicle to ensure the safety of the operation, so that during an operation of, for example, fuel supply or waste collection, the vehicle or other elements that may compromise the safety of the operation are not started. Such situations could occur in case of leakage in the (pneumatic and/or hydraulic) circuits or in case of malfunction of the batteries.

Other signals that may also be managed by the control module may come from other auxiliary equipment installed on the chassis of the vehicle, such as:
- Electric controls for managing manoeuvres of said auxiliary equipment.
- Power supply of such equipment.
- Hydraulic controls for managing pumps and/or pistons.

Depending on the internal logic defined in the software program (i.e., in the control method), these signals may be processed with the usual purpose of determining whether the engine stays off or whether it has to be started. The logical rules defined in the control software (or method) may determine the control signals to be transmitted to the engine based on the values of the input signals. The input signals may be representative of the state of activation or deactivation of the engine, and/or PTO, and/or parking brake and/or ignition key, and/or auxiliary equipment, and/or charge level of the battery, and/or pressure of compressed air at the outlet of the boiler, etc. The logical rules of the control method (software) may be structured based on limit values of the parameters of the electrical, pneumatic and/or hydraulic system, and may take into account that the special operation of the vehicle (operation to which it is dedicated) has to be kept, i.e. said limit values must be appropriate to ensure the operation of the auxiliary equipment of the vehicle.

In the particular example of the method illustrated by the single figure, the method may be started at the initial block 10, from which, once the method has been started, it may proceed to block 11. At block 11, a verification may be performed, depending on one or more input signals, of whether the vehicle is braked (if e.g. the pressure in the pneumatic brake circuit exceeds 5 bars) and whether the PTO is engaged (if, for example, the pneumatic pressure in the PTO system is greater than 5 bars). In case of positive result S of the verification at block 11, the method may proceed to block 12. In case of negative result N of the verification at block 11, the method may return to block 10 to start a new iteration of the method.

At block 12, a verification may be performed, depending on one or more input signals, of whether the engine of the vehicle is running or activated (if, for example, it is detected that an alternator generates a tension between 11 V and 15V). In case of positive result S of said verification at block 12, the method may proceed to block 16. In case of negative result N of said verification at block 12, the method may proceed to block 13.

At block 13, a verification may be performed, depending on one or more input signals, of whether the charge level of a battery is above a limit value of charge (which indicates that the battery is sufficiently charged, according to values provided by sensor(s) of charge) and whether the pneumatic pressure of a boiler is above a limit value of pressure (which indicates that the pressure in the boiler is sufficient if, for example, the pressure is greater than 6 bars). In case of positive result S of said verification at block 13, the method may proceed to block 14. In case of negative result N of said verification at block 13, the method may proceed to block 15.

At block 14, a verification may be performed, depending on one or more input signals, of whether hydraulic force is required for e.g. driving a crane or another auxiliary hydraulic system. In case of positive result S of said verification at block 14, the method may proceed to block 15. In case of negative result N of said verification at block 14, the method may proceed to block 10 to start a new iteration of the method.

At block 15, one or more control signals may be generated to activate (or start) the engine and, subsequently, the method may return to block 10 to start a new iteration of the method.

At block 16, a verification may be performed, depending on one or more input signals, of whether the charge level of a battery is above a limit value of charge (which indicates that the battery is sufficiently charged, according to values provided by sensor(s) of charge) and whether the pneumatic pressure of a boiler is above a limit value of pressure (which indicates that the pressure in the boiler is sufficient if, for example, the pressure is greater than 6 bars). In case of positive result S of said verification at block 16, the method may proceed to block 17. In case of negative result N of said verification at block 16, the method may return to block 10 to start a new iteration of the method.

At block 17, a verification may be performed, depending on one or more input signals, of whether hydraulic force is required and whether a (maximum) time limit period of activation of the engine has been exceeded. In case of positive result S of said verification at block 17, the method may proceed to block 18. In case of negative result N of said verification at block 17, the method may proceed to block 10 to start a new iteration of the method.

At block 18, one or more control signals may be generated to disable (or off) the engine and, subsequently, the method may return to block 10 to start a new iteration of the method.

The software may be loaded into the EPROM memory provided on the mainboard, which receives the input signals and generates and transmits the control signals for controlling the engine, in order to ultimately operate the auxiliary equipment dedicated to the special activity of the vehicle (e.g. fuel supply to aircraft, waste collection, etc.).

The controls performed by the described control methods may provide several advantages:
- Fuel savings.
- Reduction of gaseous and noise emissions of the engine.
- Less exposure of the operators to these emissions.

The control module may be located in the module of the vehicle cab, but it may also be located on the outside of the cab properly protected.

Any of the control methods described herein may be integrated into a known Start/Stop method as an extension thereof. Therefore, another advantage of the proposed control methods is that they may improve known Start/Stop methods in terms of greater fuel savings, greater reduction of polluting gases, etc.

Any of the control methods described in the context of the previous examples may be performed in a system having electronic/computing means configured for that purpose. Such electronic/computing means may be used interchangeably; that is, a part of said means may be electronic means and the other part may be computing means, or all said means may be electronic means or all said means may be computing means.

The electronic means may comprise, for example, a programmable electronic device such as a CPLD (Complex Programmable Logic Device), a FPGA (Field Programmable Gate Array) or an ASIC (Application-Specific Integrated Circuit).

The computing means may comprise a computing device that may comprise a memory and a processor. The memory may be configured to store a series of computer program instructions that make up any of the computer programs described in the context of the previous examples. The processor may be configured to execute these instructions stored in the memory in order to generate the various events and activities for which the system has been programmed.

The computer program (which may be stored in memory of the system) may comprise program instructions to cause the system to perform any of the control methods described in the context of the previous examples. The computer program may be embedded in a storage means (for example, a CD-ROM, a DVD, a USB drive, a computer memory or a read-only memory) or may be carried by a carrier signal (e.g. an electrical or optical carrier signal).

The computer program may be in source code, object code, an intermediate source between source code and object code, such as a partially compiled form, or in any other form suitable for use in implementing the method. The carrier may be any entity or device capable of carrying the computer program.

For example, the carrier may comprise storage means such as a ROM, for example a CD ROM or semiconductor ROM, or magnetic recording means, for example a hard disk. In addition, the carrier may be a transmissible carrier such as an electrical or optical signal which may be conveyed through electrical or optical cable or by radio or by other means.

When the computer program is embodied in a signal that may be conveyed directly by a cable or other device or means, the carrier may be constituted by such a cable or other device or means.

Alternatively, the carrier may be an integrated circuit in which the computer program is embedded, the integrated circuit being adapted for performing, or for use in the performance of, the relevant methods.

Although only a number of particular examples have been disclosed herein, the skilled person will understand that other alternative examples and/or uses, as well as obvious modifications and equivalent elements are possible. Furthermore, the present disclosure covers all the possible combinations of the particular examples that have been described. The scope of the present disclosure should not be limited by particular examples, but should be determined only by a fair reading of the claims that follow.

## Claims

1. A control method for controlling an industrial or agricultural vehicle provided with an engine, a power take-off (PTO), mechanical, electrical, hydraulic, pneumatic, safety or auxiliary elements, and sensors configured to measure one or more parameters relating to one or more of said elements and to generate one or more signals representative of said parameters, the control method being **characterized by** comprising:
receiving one or more input signals from the sensors,
generating one or more control signals based on the input signals to control the state of activation or deactivation of the engine in order to reduce fuel consumption, and
sending the control signals to the engine to cause activation or deactivation of the engine in accordance with said control signals.

2. A control method according to claim 1, **characterized in that** the control signals are configured to cause activation or deactivation of the engine by closing a potential free contact.

3. A control method according to any of claims 1 or 2, **characterized in that** the input signals represent a parameter relating to at least one of the following elements:
engine of the vehicle;
PTO;
ignition key;
parking brake;
pneumatic boiler;
electric battery.

4. A control method according to any of claims 1 to 3, **characterized in that** the input signals represent the state of activation or deactivation of at least one of the following elements:
engine of the vehicle;
PTO;
ignition key;
parking brake.

5. A control method according to any of claims 1 to 4, **characterized in that** the input signals represent the state of charge of at least one of the following elements:
pneumatic boiler;
electric battery.

6. A control method according to any of claims 1 to 5, wherein generating one or more control signals based on the input signals comprises:
verifying, depending on one or more input signals, if the vehicle is braked, the engine is off and the PTO is engaged;
in case of positive result of said verification:
verifying, depending on one or more input signals, if the level of charge of a battery is below a limit value of charge;
in case of positive result of said verification: generating one or more control signals to activate the engine.

7. A control method according to claim 6, wherein generating one or more control signals based on the input signals further comprises:
in case of positive result of verifying if the vehicle is braked, the engine is off and the PTO is engaged:
verifying, depending on one or more input signals, if the level of pneumatic pressure in a boiler is below a limit value of pressure;
in case of positive result of said verification: generating one or more control signals to activate the engine.

8. A control method according to any of claims 6 or 7, wherein generating one or more control signals based on the input signals further comprises:
in case of positive result of verifying if the vehicle is braked, the engine is off and the PTO is engaged:
verifying, depending on one or more input signals, if hydraulic force is required;
in case of positive result of said verification: generating one or more control signals to activate the engine.

9. A control method according to any of claims 1 to 8, wherein generating one or more control signals based on the input signals comprises:
verifying, depending on one or more input signals, if the vehicle is braked, the engine is on and the PTO is engaged;
in case of positive result of said verification:
verifying, depending on one or more input signals, if the level of charge of a battery and the pneumatic pressure in a boiler are above a limit value of charge and pressure respectively;
in case of positive result of said verification: verifying, depending on one or more input signals, if hydraulic force is not required and, in case of positive result of said verification: generating one or more control signals to off the engine.

10. A control method according to claim 9, wherein the verification of whether hydraulic force is required further comprises verifying, depending on one or more input signals, if a time limit of activation of the engine has been exceeded.

11. A Start/Stop control method comprising a control method according to any of claims 1 to 10.

12. A control system for an industrial or agricultural vehicle provided with an engine, a power take-off (PTO), mechanical, electrical, hydraulic, pneumatic, safety or auxiliary elements, and sensors configured to measure one or more parameters relating to one or more of said elements and to generate one or more signals representative of said parameters, the control system being **characterized by** comprising:
computer/electronic means for receiving one or more input signals from the sensors,
computer/electronic means for generating one or more control signals based on the input signals to control the state of activation or deactivation of the engine in order to reduce fuel consumption, and
computer/electronic means to send the control signals to the engine to cause activation or deactivation of the engine in accordance with said control signals.

13. A control system for an industrial or agricultural vehicle provided with an engine, a power take-off (PTO), mechanical, electrical, hydraulic, pneumatic, safety or auxiliary elements, and sensors configured to measure one or more parameters relating to one or more of said elements and to generate one or more signals representative of said parameters, the control system being **characterized by** being configured to:
receive one or more input signals from the sensors,
generate one or more control signals based on the input signals to control the state of activation or deactivation of the engine in order to reduce fuel consumption, and
send the control signals to the engine to cause activation or deactivation of the engine in accordance with said control signals.

14. An industrial or agricultural vehicle **characterized by** comprising a control system according to any of claims 12 or 13.

15. A computer program product comprising program instructions for causing a control system to execute a control method according to any of claims 1 to 11 for controlling an industrial or agricultural vehicle.
